# EUROPEAN PATENT SPECIFICATION

(11) **EP 1 801 467 B1**
(45) Date of publication and mention of the grant of the patent: **19.10.2011**
(21) Application number: 06126657.3
(22) Date of filing: 20.12.2006
(51) Int. Cl.: F16H 61/26, F16C 11/06

(54) **Decoupling device between a gearbox and gear shift lever of motor vehicles**
Entkopplung zwischen einem Getriebegehäuse und dem Getriebeschalthebel in Kraftfahrzeugen
Dispositif de découplage entre une boîte à engrenages et un levier de vitesse de véhicule automobile

(30) Priority: 21.12.2005 IT TO20050891
(43) Date of publication of application: 27.06.2007
(73) Proprietor: FIAT AUTO S.p.A., 10135 Torino (IT)
(72) Inventor: Ghione, Ferruccio, 10135 Torino (IT)
(74) Representative: Quinterno, Giuseppe

(56) References cited:
- DE-A1- 10 206 085
- DE-A1- 19 928 302
- GB-A- 1 122 340
- US-A- 6 062 098

## Description

The present invention relates to a decoupling device between a gearbox and gear shift lever for motor vehicles. Document DE-A-19928302 shows a decoupling device with all features of the preambule of claim 1.

In current gearboxes, both with Bowden type control and tie-rod type control, the gear shift lever in the motor vehicle is connected to the gear coupling rod on the gearbox in a direct manner.

In that arrangement, the alternating oscillating movement of the gear coupling lever on the gearbox during the reversals of a torque, that is to say, during the tension/release of the accelerator, is integrally transmitted to the flexible rod or the tie-rod of the coupling which transmits it, amplified by a ratio of from 3.5 to 4 times, to the gear lever inside the car, thereby generating a troublesome oscillation of the lever itself.

The object of the present invention is to overcome the above disadvantage by decoupling the coupling portion of a motor vehicle gearbox of the Bowden or tie-rod control type from the gear shift lever provided in the passenger space of the motor vehicle in a manner which is effective, easy to carry out and inexpensive.

The present invention achieves the above-mentioned objects by means of a decoupling device between the gearbox and gear shift lever of a motor vehicle having the features referred to specifically in the appended claims.

Other characteristics and advantages of the present invention will become clear from the following detailed description which is given purely by way of non-limiting example and with reference to the appended drawings, in which:

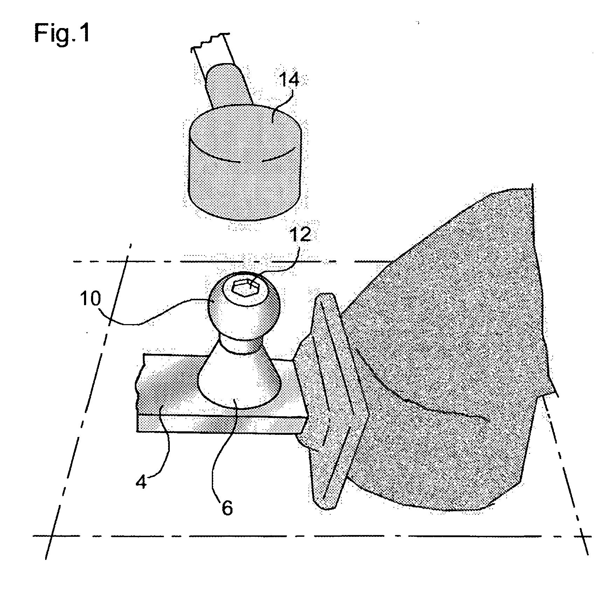

- Figure 1 is a partial perspective view of the coupling assembly of a gearbox according to the invention; and

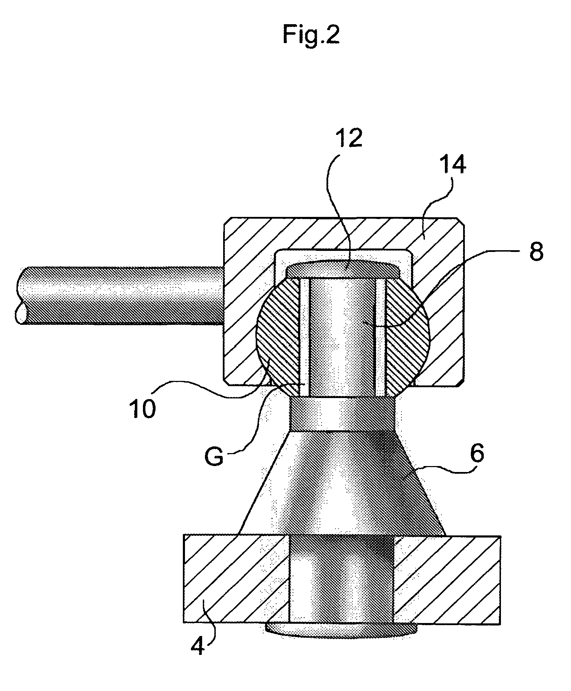

- Figure 2 is a partially sectioned view, drawn to an enlarged scale, of part of Figure 1.

With reference to the Figures, the lever provided for the coupling of the gears in a gearbox is designated 4; the lever 4 is fixedly joined to a connection, formed by a generally conical member 6, having a cylindrical pin 8 at the end thereof.

A ball 10 is fitted to the cylindrical pin 8 and has radial play G with respect to the pin 8, which allows it to slide freely. A fixing means 12 which is brought about, for example, by riveting, or a threaded element, resilient ring or other device which prevents the ball 10 from becoming detached, secures the ball 10 to the pin 8.

The normal coupling end-piece 14 connects the assembly comprising the ball 10 and the member 6 to the gear shift lever in the motor vehicle (not illustrated) by means of a Bowden cable or a tie-rod (also not illustrated).

With the arrangement illustrated, the gear coupling lever is decoupled from the Bowden cable or tie-rod connected to the gear lever 4, preventing the troublesome oscillations of the lever itself by means of the play G present between the pin 8 and the ball 10.

Naturally, the principle of the invention remaining the same, a large number of variations may be applied to what has been described and illustrated above without thereby departing from the scope of protection of the present invention.

For example, the ball 10 may be constructed from metal material, plastics material or any material suitable for reducing friction, vibrations and noise. Otherwise, the portion of the ball directed towards the pin or conversely the portion of the pin directed towards the ball or both portions may be coated with anti-friction material of the type comprising plastics material or another material suitable for attenuating noise or vibrations.

## Claims

1. A decoupling device between a gearbox and gear shift lever for a motor vehicle, comprising a connecting ball (10) for the end-piece of a flexible rod of a Bowden control or a tie-rod connecting the gear shift lever to a rod (4) for operating the gearbox by means of a connection assembly comprising a pin (8) which is fixedly joined to the rod (4); the ball (10) being fixedly joined to the end-piece of the coupling cable, **characterized in that** the ball (10) is mounted on the pin (8) with free radial play (G).

2. A decoupling device according to claim 1, **characterized in that** the ball (10) may be constructed from any metal or plastics material which also has anti-friction, anti-vibration, anti-noise characteristics.

3. A decoupling device according to claim 1 or 2, **characterized in that** the portion of the ball (10) directed towards the pin (8) or conversely the portion of the pin (8) directed towards the ball (10) or both portions may similarly also be coated with anti-friction material of the type comprising plastics material or another material suitable for attenuating noise and vibrations.

## Patentansprüche

1. Entkopplungsvorrichtung zwischen einem Getriebegehäuse und einem Gangschalthebel für ein Kraftfahrzeug, enthaltend eine Verbindungskugel (10) für das Endstück eines flexiblen Stabes eines Bowdenzuges oder eines Zugankers, der den Gangschalthebel mit einem Stab (4) zum Betätigen des Getriebegehäuses mit Hilfe einer Verbindungsanordnung verbindet, die einen Zapfen (8) enthält, der fest mit dem Stab (4) verbunden ist; wobei die Kugel (10) mit dem Endstück des Verbindungsseils fest verbunden ist, **dadurch gekennzeichnet, dass** die Kugel (10) an dem Zapfen (8) mit einem freien radialen Spiel (G) angebracht ist.

2. Entkopplungsvorrichtung nach Anspruch 1, **dadurch gekennzeichnet, dass** die Kugel (10) aus einem Metall oder einem Kunststoffmaterial bestehen kann, das Antireibungs-, Antivibrations- und Antilärmeigenschaften hat.

3. Entkopplungsvorrichtung nach Anspruch 1 oder 2, **dadurch gekennzeichnet, dass** der Abschnitt der Kugel (10), der dem Zapfen (8) zugewandt ist, oder umgekehrt der Abschnitt des Zapfens (8), der der Kugel (10) zugewandt ist, oder beide Abschnitte in ähnlicher Weise auch mit dem Antireibungsmaterial des Typs beschichtet sein können, der ein Kunststoffmaterial oder ein anderes Material umfasst, dass sich für die Abschwächung von Lärm und Vibrationen eignet.

## Revendications

1. Dispositif de découplage entre une boîte à engrenages et un levier de changement de vitesse pour un véhicule à moteur, comprenant une rotule (10) pour la pièce d'extrémité d'une tige flexible d'un câble de commande Bowden ou d'une biellette de direction connectant le levier de changement de vitesse à une tige (4) pour faire fonctionner la boîte à engrenages au moyen d'un ensemble de raccordement comprenant une broche (8) qui est montée de façon fixe sur la tige (4) ; la rotule (10) étant montée de façon fixe sur la pièce d'extrémité du câble de raccordement, le dispositif étant **caractérisé en ce que** la rotule (10) est montée sur la broche (8) avec un jeu d'extrémité radial (G).

2. Dispositif de découplage selon la revendication 1, **caractérisé en ce que** la rotule (10) peut être réalisée à partir de n'importe quel matériau métallique ou plastique doté de caractéristiques antifriction, anti-vibration ou antibruit.

3. Dispositif de découplage selon la revendication 1 ou 2, **caractérisé en ce que** la partie de la rotule (10) qui est dirigée vers la broche (8) ou, à l'inverse, la partie de la broche (8) qui est dirigée vers la rotule (10), ou bien encore les deux parties, peut/peuvent être recouverte(s) de façon similaire d'un matériau antifriction du type comprenant un matériau plastique ou tout autre matériau adapté pour atténuer du bruit et des vibrations.
